(19) **Europäisches Patentamt / European Patent Office / Office européen des brevets**

(11) **EP 4 748 237 A1**

(12) # EUROPÄISCHE PATENTANMELDUNG
veröffentlicht nach Art. 153 Abs. 4 EPÜ

(43) Date of publication:
**27.05.2026 Bulletin 2026/22**

(21) Application number: **24845105.6**

(22) Date of filing: **28.03.2024**

(51) International Patent Classification (IPC):
**A23F 5/02** *(2006.01)*   **A23F 5/04** *(2006.01)*
**A23F 5/10** *(2006.01)*

(52) Cooperative Patent Classification (CPC):
**A23F 5/02; A23F 5/04; A23F 5/10**

(86) International application number:
**PCT/JP2024/012695**

(87) International publication number:
**WO 2025/022720 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.07.2023 JP 2023119287**

(71) Applicant: **Stream Inc.
Kagoshima-shi, Kagoshima, 891-0101 (JP)**

(72) Inventors:
- **OGAWA, Kazuaki
  Kagoshima-shi, Kagoshima 891-0101 (JP)**
- **OGAWA, Mariko
  Kagoshima-shi, Kagoshima 891-0101 (JP)**

- **OGAWA, Tadashi
  Fukuoka-shi, Fukuoka 810-0062 (JP)**
- **OGAWA, Riho
  Fukuoka-shi, Fukuoka 810-0062 (JP)**
- **OGAWA, Masashi
  Tokyo 108-0074 (JP)**
- **OGAWA, Ayaka
  Tokyo 108-0074 (JP)**
- **OGAWA, Hiromi
  Kagoshima-shi, Kagoshima 891-0101 (JP)**

(74) Representative: **Hoffmann Eitle
Patent- und Rechtsanwälte PartmbB
Arabellastraße 30
81925 München (DE)**

(54) **COFFEE BEAN TREATMENT METHOD AND COFFEE BEANS**

(57)    To provide a method for treating coffee beans, by which acrylamide can be reduced without causing deterioration of taste and flavor, and to provide the coffee beans. The method for treating coffee beans includes heating coffee beans at a temperature of 40°C or higher and lower than a temperature at which a first crack occurs. In the coffee beans, the pH of a liquid extracted with water does not show a lowering tendency compared with the case of beans subjected to only roasting, and the concentration of acrylamide in the coffee beans is 90% or less as compared with the beans subjected to only roasting.

EP 4 748 237 A1

## Description

Technical Field

The present invention relates to a method for treating coffee beans, and coffee beans.

Background Art

It is known that heating and cooking of a food material improves the palatability of the food material due to changes in taste, flavor, and texture, and improves the stability and preservability of the food material due to a sterilization effect. It is also known that various complicated chemical changes occur to produce not only nutrients that are good for health but also harmful substances. For example, it has been reported that acrylamide is present in many foods cooked at high temperatures (see NPL 1), and there is a concern about adverse effects on health. In addition, acrylamide is also considered to be neurotoxic and genotoxic (Ministry of Agriculture, Forestry and Fisheries, Health Effects of Acrylamide), and the International Agency for Research on Cancer (IARC) classified it as "probably carcinogenic to humans (Group 2A)". Coffee is typically the food item where exposure to acrylamide is most of a concern, as coffee is often consumed routinely alongside potatoes (such as potato chips and fried potatoes) and cereals (processed grain foods).

In cooked foods, many generation mechanisms of acrylamide have been proposed, and among them, a chemical reaction pathway between free asparagine and a reducing saccharide at a high temperature of 120°C or higher is considered to be the most important (see NPL 2). In coffee, as in other foods, various studies have been made on the reduction of acrylamide.

For example, it has been described that the content of acrylamide in roasted beans is reduced by administering an asparagine degrading enzyme that changes asparagine into aspartic acid to coffee raw beans (see PTL 1). In addition, it has been described that acrylamide is reduced by administering an acrylamide degrading enzyme that changes acrylamide into acrylic acid to the extracted coffee liquid (see NPL 3). Roasting using superheated steam (see NPL 4) or roasting under vacuum (see NPL 5) has also been performed.

Citation List

Patent Literature

PTL 1: JP 2006-503592 A

Non Patent Literature

NPL 1: E. Tareke et.al: Analysis of Acrylamide, a Carcinogen Formed in Heated Foodstuffs. J. Agric. Food Chem. 2002:50:4998-5006

NPL 2: D.S. Morttram, B.L. Wedzich, A.T. Dodson: Acrylamide is formed in the Maillard reaction. Nature 419 (2002) pp. 448-449

NPL 3: D.K.Bedade, Y.B.Sutar, R.S.Singhal, Chitosan coated calcium alginate beads for covalent immobilization of acrylamide: process parameters and removal of acrylamide from coffee. Food Chem, 275(2019), pp.95-104

NPL 4: P. Rattanarat, N.Chindapan, S.Devahastin, Comparative evaluation of acrylamide and polycyclic aromatic hydrocarbons contents in Robusta coffee beans roasted by hot air and superheated steam. Food Chem, 341(2021), Article 128266

NPL 5: M.Anese, M.C.Nicoli, G.Verardo, M.Munari, G.Mirolo, R.Bortolomeazzi, Effect of vacuum roasting on acrylamide formation and reduction in coffee beans. Food Chem, 145(2014), pp. 168-172

Summary of Invention

Technical Problem

In the method described in PTL 1, the content of acrylamide in roasted beans could be reduced, but the process was complicated, and deterioration of taste and flavor was observed. Also in the method of NPL 3, deterioration of taste and flavor has occurred. In NPL 4, an effect of reducing acrylamide can be obtained only in the case of deep roasting as compared with conventional hot air roasting, but deterioration of taste and flavor has occurred. In addition, in the method of NPL 5, an effect of reducing acrylamide by about 50% is obtained as compared with roasting under atmospheric pressure, and deterioration of taste and flavor does not occur, but the effect is limited only at the time of moderate roasting.

In addition, coffee beans have a very hard structure, which makes it difficult to treat raw beans before roasting in order to reduce acrylamide, and coffee is one of the most difficult food materials to reduce acrylamide among various food materials. On the other hand, roasting is the only method for obtaining the taste and flavor characteristic of coffee. In addition, since most coffee products are sold in the form of roasted beans, instant coffee, or ready-to-drink extracted coffee, it has been considered that there is almost no room for consumers to reduce acrylamide.

The present invention has been made in view of such circumstances, and an object thereof is to provide a method for treating coffee beans in which acrylamide can be reduced without causing deterioration of taste and flavor, and coffee beans.

Solution to Problem

The present invention has been made in order to solve the aforementioned problems, and has been completed based on the finding that the problems of the present invention can be solved by heating coffee beans at a predetermined temperature. The gist of the present invention is as follows.

[1] A method for treating coffee beans, including a heating treatment step of heating coffee beans at a temperature of 40°C or higher and lower than a temperature at which a first crack occurs.

[2] The method for treating coffee beans according to [1], further including a roasting step of roasting the coffee beans, in which the heating treatment step is performed before the roasting step.

[3] The method for treating coffee beans according to [1], further including a roasting step of roasting the coffee beans, in which the heating treatment step is performed after the roasting step.

[4] The method for treating coffee beans according to [1], further including a roasting step of roasting the coffee beans, in which the heating treatment step includes a first heating treatment step performed before the roasting step, and a second heating treatment step performed after the roasting step.

[5] The method for treating coffee beans according to any one of [2] to [4], in which the heating treatment step is performed until an acrylamide concentration in the coffee beans becomes 90% or less as compared with coffee beans subjected to only the roasting step.

[6] Coffee beans obtained from the same raw beans, in which a concentration of acrylamide in the coffee beans is 90% or less as compared with coffee beans immediately after being subjected to only a roasting step.

[7] The coffee beans according to [6], in which a liquid obtained by extracting the coffee beans with water is not accompanied by a decrease in pH caused by rancidity.

[8] The coffee beans according to [6] or [7], in which the coffee beans have a concentration of free asparagine of 29 mg/100 g or less.

[9] Coffee beans treated by the method for treating coffee beans according to any one of [1] to [4].

Advantageous Effects of Invention

According to the present invention, acrylamide can be reduced without causing deterioration of taste and flavor.

Description of Embodiments

Hereinafter, a method for treating coffee beans and coffee beans according to the present invention will be described in detail.

[Method for Treating Coffee Beans]

The method for treating coffee beans of the present invention includes a heating treatment step of heating coffee beans at a temperature of 40°C or higher and lower than a temperature at which a first crack occurs.

(Coffee Beans)

The coffee beans used in the present embodiment are not limited to their varieties, and various varieties can be used. In addition, a mixture of a plurality of varieties may be used. Although there are various types and cultivars of coffee tree (coffea), mainly Arabica and Canephora (Robusta) are cultivated for commercial use. Hybrid varieties of Arabica crossed with Robusta have been developed. In the present embodiment, the variety is not particularly limited, but the aforementioned variety is preferable.

In the present embodiment, "coffee bean" is used to include both "coffee berry" and "coffee bean". "Coffee berry" means a coffee berry from which the pericarp and pulp have not been removed. In addition, "coffee bean" means a coffee berry from which the pericarp and berry have been removed. Hereinafter, in the description herein, "coffee berry" may be simply referred to as "berry", and "coffee bean" may be simply referred to as "bean".

The coffee beans to be subjected to the treatment method of the present application are a group of coffee beans, and among the group of coffee beans, those composed of raw beans are referred to as "the same raw beans".

In order to convert the harvested "berries" into "beans", it is necessary to perform various purification treatments, and the purification treatment method varies depending on the production area, but a dry process (natural), a wet process (washed), and a pulped natural are mainly used. The beans used in the present invention are not limited to such purification treatment methods.

In addition, the water content of the beans used in the present embodiment is not particularly limited. In most cases, since the beans are exported after being dried to a water content of 9 to 12% at the place of production, even in the case of using beans produced in one's own coffee plantation (Stream coffee plantation, Kagoshima City), beans having a water content of the same degree can be used.

In many cases, the beans which have been subjected to a purification treatment after harvesting are roasted as they are. If necessary, pretreatment such as decaffeination or ripening fermentation treatment is carried out, and the beans used in the present invention may or may not be subjected to such pretreatment.

(Heating Treatment Step)

The method for treating coffee beans of the present invention includes a heating treatment step of heating coffee beans at a temperature of 40°C or higher and lower than a temperature at which a first crack occurs. The heating treatment step is to perform heating for a certain period of time at an arbitrary temperature of 40°C or higher and lower than the temperature at which the first crack occurs. In addition, the temperature at which the first crack occurs can be found, for example, by experimentally heating part of the coffee beans to be treated. The method for performing the heating treatment step is not particularly limited. Although there are three types of the way in which heat is transferred, i.e., conductive heat, convective heat, and radiant heat (radiation heat), when heat is actually transferred to food, the heat is transferred in a complicatedly combined state. In the present embodiment, the way in which heat is transferred in the heating treatment step is not particularly limited. In addition, a wide variety of devices such as a direct fire, a charcoal fire, an electric device, a gas device, and an IH device can be used as a device used in the heating treatment step.

The heating treatment step is different from heating in the roasting step and gradual cooling after stopping roasting in the roasting step in that the heating treatment step is performed before and after the roasting step separately from the roasting step described later.

When the heating treatment step is performed, the coffee beans may be wrapped with nothing, i.e., naked, or may be wrapped with a food wrap film (trade name: Saran Wrap (registered trademark)), an aluminum foil, a plastic bag with a fastener (trade name: Ziploc (registered trademark)), or the like. Furthermore, a vacuum cooking method may be used in which the coffee beans are wrapped with a special film, air is removed, and the bag is sealed.

The temperature in the heating treatment step is a temperature of 40°C or higher and lower than the temperature at which a first crack occurs. By heating the coffee beans for a certain period of time at a temperature of 40°C or higher and lower than the temperature at which the first crack occurs, the color of the coffee beans changes from the initial light green color to yellow and then brown with the passage of time. In the case of coffee berry, several pieces are taken out at regular intervals during heating, threshing (the pericarp, pulp, mucilage, parchment, and silver skin are removed from the coffee berry), and the color change is checked by taking out the beans. The color change rate of coffee beans by heating is affected by the temperature and the presence or absence of a threshing treatment. For example, in the case of roasting at a normal high temperature of 185 to 250°C, the time required until the color tone corresponds to the color tone immediately after the occurrence of the first crack is about 7 days at 90°C in the case of berry. In the case of beans, it takes about 10 days at 90°C and about 14 days at 70°C.

When coffee beans are roasted, complex chemical reactions occur to cause changes in the color of coffee beans and characteristic taste and flavor, which are mainly caused by a Maillard reaction occurring between various amino acids, which are components of coffee beans, and reducing sugars such as glucose and fructose. In addition, as a main generation route of acrylamide, a Maillard reaction between free asparagine, which is a kind of amino acid, and reducing sugars is exemplified. By measuring the changes over time in the concentration of free asparagine and acrylamide in the heat-treated coffee beans, it was inferred that the change in color of the coffee beans during heating was due to the Maillard reaction because the concentration of free asparagine decreases and the concentration of acrylamide increases at the early stage of the heating treatment.

The heating temperature may be 40°C or higher and lower than the temperature at which the first crack occurs, regardless of whether the heating treatment is performed before or after the roasting of the coffee beans. The lower limit of the preferable temperature range is preferably 70°C or higher, and more preferably 90°C or higher. On the other hand, the upper limit is preferably 150°C or lower, and more preferably 120°C or lower.

In addition, the heating treatment step is preferably carried out until the concentration of acrylamide reaches 90% or less, preferably 25% or less, and more preferably 0.0% (detection level or less), compared to beans subjected to only the roasting step without the heating treatment step.

First, an embodiment in which coffee beans before roasting are heated will be described.

Acrylamide is generated when coffee beans before roasting are heated for a certain period of time at a temperature of 40°C or higher and lower than the temperature at which a first crack occurs. The concentration of acrylamide generated by heating at a temperature of 40°C or higher and lower than the temperature at which the first crack occurs reaches a peak by maintaining the heating, and then decreases with time, so that the acrylamide concentration in the coffee beans can be reduced.

In addition, as described above, examples of a main generation route of acrylamide include a Maillard reaction between free asparagine, which is a kind of amino acid, and reducing sugars. The concentration of free asparagine in raw beans (beans before roasting) can be reduced by heating coffee beans at a temperature of 40°C or higher and lower than the temperature at which the first crack occurs. By reducing the concentration of free asparagine, the generation of acrylamide can be suppressed, and acrylamide in coffee beans can be reduced.

(Roasting Step)

By roasting the coffee beans subjected to the aforementioned heating treatment step by the roasting step, the components contained in the coffee beans undergo a chemical change, and thus it is possible to obtain the unique taste of coffee such as a volatile flavor, bitterness, sourness, and sweetness. The "roasting step" refers to roasting of coffee beans that is generally performed, and is, for example, a step of charging raw beans at room temperature into a roaster heated to a predetermined temperature, heating the coffee beans to a temperature at which a first crack or a second crack occurs or to a temperature higher than the temperature at which a second crack occurs until a desired roasting degree is reached through steps of steaming and moisture removal, terminating the heating when the desired degree of roasting is reached, and performing cooling to stop a chemical reaction. In general roasting, the time from charging raw beans into the roaster to the termination of heating is less than 20 minutes, and about $1.5 \times 10^8$ to $3.0 \times 10^8$ J of heat is required per 1 kg of coffee beans, but the amount of heat is not limited thereto and can be appropriately changed according to the type of coffee beans and the roasting method.

In the present embodiment, there is no particularly limited set time between the heating treatment step and the roasting step, and the roasting step may be carried out following the heating treatment step, or a fixed time interval may be set. In the present embodiment, the roasting method is not particularly limited. For example, for the stirring type roasting, a drum type or fluidized bed type roaster can be used. For the heating type roasting, a direct-fire type, semi-hot air type, or hot air type roaster can be used.

Regarding the roasting temperature, roasting can be performed at a temperature that is generally performed, for example, the temperature can be gradually increased from room temperature and can be performed at a temperature up to 250°C depending on the degree of roasting. When roasting is started, the coffee beans gradually expand, and at this time, chemical changes such as taste and color occur in the coffee beans. At the same time, carbon dioxide and water vapor are produced, which eventually become unable to withstand the increase in internal pressure. As a result, the cells of the coffee beans are destroyed, and a crackling sound is generated. This sound is called a first crack and generally occurs at around 200°C. When roasting is further continued, the sound of the first crack subsides, but the chemical reactions and expansion continue, so that the cells are further broken, and a popping sound is generated due to the evaporation of the fat and oil. This sound is called a second crack and generally occurs at around 220°C. The start and end time points of the first crack and the second crack are one of the indexes of the degree of roasting such as light roasting, medium roasting, and deep roasting. The temperature at the time of stopping roasting is referred to as "temperature at the time of stopping roasting".

There is also the Agtron Scale as an objective indicator of the degree of roasting of beans during roasting or of beans after stopping roasting. This is a method of measuring the degree of roasting of coffee using a food grade spectrophotometer manufactured by Agtron Corporation in the United States. In addition, there is a simple Agtron color disc which does not use a spectrophotometer, and in this disc, colors are classified into 8 stages from #95 having a low roasting degree to #25 having a high roasting degree. In the present invention, the effect of reducing acrylamide by heating was confirmed as compared with the coffee beans subjected to only the roasting step. Therefore, for example, in order to make the degree of roasting of each specimen to be compared as similar as possible, the degree of roasting of beans during roasting can be confirmed by a change in state due to the first crack or the second crack, and the degree of roasting of beans after stopping roasting can be confirmed by using an Agtron color disc. By making the determination by the Agtron color disc the same, the degree of roasting after roasting can be made uniform. Since it is generally known that the acrylamide concentration of roasted beans increases as the beans are lightly roasted and decreases as the beans are deeply roasted, the effect of reducing the acrylamide concentration by heating can be confirmed by measuring the acrylamide concentration in the same manner as in the determination of roasted beans not subjected to the heating treatment step of the present invention and Agtron color disc. Therefore, when measuring acrylamide of beans of the same degree of roasting by the determination of Agtron color disc, if the concentration of acrylamide of one bean is lower than that of the other bean, it can be said that the method for treating coffee beans of the present invention is applied.

In the present invention, the degree of roasting is not particularly limited, and may be any degree of roasting.

In addition, as described above, free asparagine is reduced by heating coffee beans at 40°C or higher and at a temperature lower than the temperature at which the first crack occurs, and the free asparagine concentration is reduced to below the detection level by continuing heating at 40°C or higher and at a temperature lower than the temperature at which the first crack occurs. Since the generation of acrylamide by the Maillard reaction can be suppressed by roasting the beans having a reduced free asparagine concentration, the amount of acrylamide in the roasted coffee beans can also be reduced.

Although the method for treating coffee beans has been described above in which the roasting step is performed after the heating treatment step of coffee beans is performed, the heating treatment step of coffee beans may be performed after the roasting step of coffee beans. At that time, there is no set time particularly limited between the roasting step and the heating treatment step, and the heating treatment step may be performed following the roasting step or may be set at regular time intervals. Even when the beans previously subjected to the roasting step are heated for a predetermined time at a temperature of 40°C or higher and lower than the temperature at which the first crack occurs, the acrylamide concentration can be reduced.

Furthermore, the heating treatment step is not limited to either before the roasting step or after the roasting step, and includes a first heating treatment step in which the heating treatment step is carried out before the roasting step and a second heating treatment step in which the heating treatment step is carried out after the roasting step, and the heating treatment steps may be carried out before and after the roasting step, respectively. The first heating treatment step and the second heating treatment step can be carried out in the same manner as the heating treatment step described above.

[Coffee Beans Subjected to Heating Treatment Step]

Coffee beans that have been subjected to the roasting step in addition to the heating treatment step of the present invention have an acrylamide concentration of 90% or less as compared with coffee beans immediately after being subjected to only the roasting step. In addition, it is preferable that a liquid obtained by extracting coffee beans with water is not accompanied by a decrease in pH caused by rancidity. Note that "immediately after being subjected to only the roasting step" refers to within 72 hours from the point in time when heating is terminated and cooling to room temperature is performed after reaching a desired degree of roasting in the roasting step described above.

It is known that acrylamides in roasted coffee beans are naturally reduced during the storage period. For example, it has been reported that the acrylamide concentration was reduced from 203 $\mu$g/kg to 147 $\mu$g/kg (72.4%) when stored at room temperature for 7 months (T. Delatour et al: Improved sample preparation to determine acrylamide in difficult matrixes such as chocolate powder, cocoa, and coffee by liquid chromatography tandem mass spectroscopy, J. Agric. Food Chem., 2004 Jul 28; 52(15): 4625-4631). In addition, it has been reported that when stored at 10 to 12°C for 3 months, the acrylamide concentration was reduced from 285 $\mu$g/kg to 200 $\mu$g/kg (70.2%), and further, when stored for 6 months, the acrylamide concentration was reduced by 40 to 65% (K. Hoenicke, R. Gatermann: Studies on the Stability of Acrylamide in Food During Storage, Journal of AOAC International, Vol. 88, Issue 1, 2006, 268-273). However, it is also known that long-term storage results in significant impairment of taste and flavor (I. Lantz, R. Ternite, J. Wilkens, K. Hoenicke, H. Guenther, G. H. D. van der Stegen: Studies on acrylamide levels in roasting, storage and brewing of coffee, Mol. Nutr. Food Res., 2006, 50: 1039-1046). The mechanism of deterioration of roasted beans over time includes, for example, the following rancidity.

<Rancidity>

When fatty acids constituting fats and oils are subjected to air oxidation, the fatty acids become fatty acids having a high degree of unsaturation, and when the fatty acids are further oxidized, the fatty acids are decomposed into lower fatty acids having about 6 to 9 carbon atoms, resulting in a deteriorated and unpleasant odor (rancid odor, rancid) of the oil and a decrease in pH. The rate of progress of such deterioration due to oxidation is relatively slow, and it takes 7 to 8 weeks at normal temperature to change to such an extent that a difference can be seen.

In the present embodiment, since the pH of the liquid extracted from the coffee beans with a reduced acrylamide concentration, which have been subjected to the heating treatment step and the roasting step, is not significantly different from that of the liquid extracted from the beans subjected only to the roasting step, the occurrence of rancidity can be suppressed and the sourness can be prevented from becoming strong.

For example, when the pH of tap water, a liquid (control) obtained by extracting coffee beans roasted at a normal high temperature (temperature at the time of stopping roasting: about 220°C, roasting time: about 15 minutes) as they are with water, and a liquid obtained by extracting coffee beans obtained by heating the above coffee beans at 90°C for 2 days and 7 days with water is measured, the pH is 6.64 ± 0.01, 5.65 ± 0.08, 5.44 ± 0.01, and 5.58 ± 0.02 for tap water, control, heating for 2 days, and heating for 7 days, respectively, and the pH does not tend to decrease by performing heating treatment of coffee beans roasted at a normal high temperature at 90°C. For comparison, the pH of the beans roasted at a normal high temperature and then stored frozen for 6 months was 5.59 ± 0.02, and the pH of the beans stored at room temperature for 6 months after roasting was 5.12 ± 0.00, which was a clear decrease.

For pH measurement, 10 g of coffee beans were medium-ground (particle size: about 0.6 to 0.71 mm, standard of All Japan Coffee Association) and extracted by a paper filter drip method using 130 mL of tap water at about 80°C. The extracted liquid was left to stand until it reached about 45°C, and then pH measurement was performed. For the pH measurement, a PH60 pH tester manufactured by APERA INSTRUMENTS Co., Ltd. was used.

In addition, the acrylamide concentration of the coffee beans is 90% or less compared to beans subjected to only the roasting step without the heating treatment step. As described above, according to the method for treating coffee beans of the present invention, since the acrylamide concentration can be reduced by the heating treatment, the acrylamide concentration of the coffee beans subjected to the heating treatment can be reduced to 90% or less of the coffee beans subjected only to roasting without the heating treatment. The acrylamide concentration of the coffee beans is preferably 90% or less, more preferably 25% or less, and most preferably 0.0% (detection limit value or less) as compared with the beans subjected only to roasting without the heating treatment.

Further, the concentration of free asparagine in coffee beans is preferably 29 mg/100 g or less. As described above, free asparagine generates acrylamides through the Maillard reaction. Therefore, the generation of acrylamides can be suppressed by reducing the concentration of free asparagine in coffee beans. The concentration of free asparagine is preferably 20 mg/100 g or less, more preferably 10 mg/100 g or less, and most preferably 1 mg/100 g (detection limit value) or less.

Examples

Hereinafter, the present invention will be described more specifically with reference to Examples, but the present invention is not limited to the following Examples.

Example 1: Measurement of change over time in acrylamide concentration when coffee beans are heated at 90°C

The concentration of acrylamide in coffee beans was measured when the coffee beans were subjected to heating treatment at 90°C for 2 days, 7 days, 14 days, and 21 days.

The raw beans used were Arabica beans imported from Brazil and purchased from a coffee bean retail store. Raw beans of about 200 g were sealed in Ziploc (registered trademark), and the whole was wrapped with aluminum foil as one specimen to prepare four specimens. As a heating device, a T-fal Lakula Cooker compact electric pressure cooker was used. The experiment was started by selecting the low-temperature cooking mode, setting the temperature to 90°C and setting the cooking time to the maximum settable time of 22 hours. The experimental period of 21 days was reset immediately after or before the set time expired, and heating was continued. The heated specimens were refrigerated until the heating experiment was completed, and after the heating experiment was completed, all the specimens were delivered to the inspection center (Japan Functional Food Analysis and Research Center) in a refrigerated state as soon as possible, and the measurement operation was started within 72 hours at the latest after the sample shipment. Acrylamide concentrations were measured by liquid chromatography-mass spectrometry. The detection limit of acrylamide concentration was 0.01 ppm. The measurement results of the acrylamide concentration are shown in Table 1. In addition, the time point of 2 days after the start of heating is taken as the peak of the acrylamide concentration, and the ratio when the acrylamide concentration is taken as 100% is shown.

<Measurement Sample Preparation Method>

The heated coffee beans were ground, mixed, and homogenized with a mill mixer to prepare a sample for analysis. The sample for analysis was collected in a 1 g centrifuge tube, an internal standard solution (acrylamide-$^{13}C_3$ solution) was added thereto, and the volume of the mixture was adjusted to 50 mL with water.

The mixture was extracted by shaking for 30 minutes, and then centrifuged (3000 rpm, 5 minutes). The obtained extraction liquid 3 mL was loaded onto a C18 solid-phase column (the initial flow liquid 1 mL was discarded), water was added, and the effluent was collected as 4 mL. The collected liquid was filtered (centrifugal ultra-filtration: 5000 rpm, 30 minutes) and measured by liquid chromatography-mass spectrometry (LC-MS/MS). In addition, the acrylamide concentration in the sample was determined by the following calculation formula.

<Conditions for liquid chromatography-mass spectrometry>

· Column: Waters Atlantis T3 3 μm, 2.1 mm × 150 mm
· Mobile phase: 0.1 vol% formic acid:methanol (95:5)
· Column temperature: 30°C
. Injection volume: 10 μL
· Measurement ions: acrylamide; 72 → 55 m/z, acrylamide $^{13}C_3$; 75 → 78 m/z

<Calculation Formula>

[Math. 1]

$$\text{Acrylamide content in sample}(\mu g/g)$$

$$= \frac{\text{Content in extraction solution}(\mu g/mL) \times \text{Constant volume}(mL)}{\text{Sample collection amount}(g) \times 1000}$$

[Table 1]

| Number of heating days | Acrylamide concentration (ppm) | Ratio (%) to acrylamide concentration after 2 days of heating |
|---|---|---|
| After 2 days | 0.39 | 100 |
| After 7 days | 0.09 | 23.0 |
| After 14 days | 0.02 | 5.1 |
| After 21 days | 0.02 | 5.1 |

Example 2: Measurement of change over time in free asparagine concentration when coffee beans are heated at 70°C or 90°C

The concentration of free asparagine in coffee beans was measured when the coffee beans were heated at 70°C for 7 days, 14 days, 21 days, and 28 days. In addition, the concentration of free asparagine in coffee beans was measured when the coffee beans were heated at 90°C for 2 days, 7 days, 14 days, 21 days, and 28 days.
The beans used were imported from Brazil as in Example 1. In addition, the beans were heated in the low-temperature cooking mode of the T-fal electric pressure cooker as in Example 1, and a series of operations including the wrapping of the raw beans in 200 g of each specimen, the operation of continuing the heating, and the measuring operation performed in the inspection center were also performed as in Example 1.
The free asparagine concentration was measured by an automatic amino acid analysis method. The detection limit value of the free asparagine concentration was 1 mg/100 g. The measurement results of the free asparagine concentration are shown in Table 2. In addition, the ratio when the free asparagine concentration in raw beans before heating is 100% is shown.
The amino acid automatic analysis was performed by an original test method at the request to the Inspection Center (Japan Functional Food Analysis and Research Center).

[Table 2]

| Number of heating days | 70°C | | 90°C | |
|---|---|---|---|---|
| | Free asparagine concentration (mg/100g) | Ratio (%) to free asparagine concentration before heating | Free asparagine concentration (mg/100 g) | Ratio (%) to free asparagine concentration before heating |
| Before heating | 45 | 100 | 45 | 100 |
| After 2 days | - | - | 14 | 31.1 |
| After 7 days | 29 | 64.4 | Detection limit value or less | - |
| After 14 days | 16 | 35.6 | Detection limit value or less | - |
| After 21 days | 14 | 31.1 | Detection limit value or less | - |
| After 28 days | 10 | 22.2 | Detection limit value or less | - |

Since the concentration of free asparagine was detected up to 2 days after heating at 90°C and not detected after 7 days, and the acrylamide concentration increased after 2 days of heating and decreased after 7 days in Example 1, it is presumed that acrylamide is generated in the presence of free asparagine, and acrylamide decreases when free asparagine is depleted. Therefore, if the concentration of free asparagine can be reduced, the generation of acrylamide in coffee beans can be suppressed.

Example 3: Measurement of change over time in acrylamide concentration of coffee beans roasted until immediately after first crack after heating raw beans at 90°C

The beans used and the heating treatment method were carried out in the same manner as in Example 1. The amount of raw beans of one specimen was about 200 g, and the heating treatment was carried out for 2 days, 7 days, 14 days, 21 days, and 28 days, and then each specimen was roasted. The roasting was fixed at a medium heat using a KAKACOO coffee roaster as a roaster and a cassette stove Iwatani ECO premium as a heat source. The roasting operation was stopped immediately after the first crack started (the temperature at the time of stopping roasting was about 200°C) in order to make the degree of roasting for each specimen the same as much as possible and to make the roasting light with high acrylamide concentration. The roasted beans were quickly cooled using a single layer coffee bean cooler, EC Hometec. The Agtron color disc value of beans stopped roasting immediately after the first crack was equivalent to #95. Acrylamide of the roasted coffee beans was measured in the same manner as described in Example 1. The results are shown in Table 3. In addition, the acrylamide concentration of beans subjected only to roasting without heating treatment (beans after cooling for 2 days (48 hours)) was measured, and the ratio of the acrylamide concentration after heating treatment when the acrylamide concentration of beans subjected only to roasting was taken as 100% is shown.

[Table 3]

| Number of heating days | Acrylamide concentration (ppm) | Ratio (%) to acrylamide concentration of beans subjected only to roasting |
|---|---|---|
| Roasting only | 0.34 | 100 |
| 2 days | 0.30 | 88.2 |
| 7 days | 0.20 | 58.2 |
| 14 days | 0.10 | 29.4 |
| 21 days | 0.08 | 23.5 |

The amount of heat that was given to the raw beans when the raw beans were subjected to heating treatment at 90°C for 2 days is represented by Amount of Heat (J) = Weight of Raw Beans (g) × Temperature (°C) × Time (sec) (assuming that the room temperature is 20°C), and Amount of Heat (J) = $200 \times (90 - 20) \times 48 \times 60 \times 60 =$ about $2.4 \times 10^9$, which is $1.24 \times 10^{10}$ per 1 kg.

Further, assuming that the temperature rise of the beans from immediately after roasting to the time of stopping roasting is a linear function, and that the time taken for roasting is 20 minutes, the amount of heat that is required for roasting is: amount of heat (J) = $200 \times (200 - 20) \times 1/2 \times 20 \times 60 = 2.16 \times 10^7$, which is $1.08 \times 10^8$ per 1 kg.

Thus, in order to reduce the acrylamide concentration to about 90% or less, an amount of heat about 100 times the amount of heat required for the roasting step was required.

Example 4: Measurement of change over time in acrylamide concentration when coffee beans roasted until immediately after first crack were heated at 90°C

The raw beans used were the same as those used in Example 1, and roasting was performed according to the roasting method of Example 3. The raw beans of one specimen were approximately 200 g, and roasting was performed for each specimen. Roasting was stopped immediately after the first crack and the roasted and cooled beans were sealed in Ziploc (registered trademark) per specimen and subjected to heating treatment at 90°C for 1 day, 2 days, and 7 days according to the procedure of Example 1. The acrylamide concentration of the coffee beans after the heating treatment was measured. The Agtron color index values of the beans for each number of heating days were all equivalent to #95. The results are shown in Table 4.

[Table 4]

| Number of heating days | Acrylamide concentration (ppm) | Ratio (%) to acrylamide concentration of beans subjected only to roasting |
|---|---|---|
| Roasting only | 0.34 | 100 |
| 1 day | 0.08 | 23.5 |
| 2 days | 0.01 | 2.9 |
| 7 days | Detection limit value or less | - |

Example 5: Measurement of change over time in acrylamide concentration when coffee beans roasted until immediately after second crack were heated at 90°C

The raw beans used were the same raw beans as used in Example 1, and the same roaster and cooler as used in Example 3 were used. Roasting was performed according to the roasting method of Example 3, and roasting was stopped immediately after the second crack. The roasted beans were subjected to heating treatment at 90°C for 3 days and 7 days according to the procedure of Example 1. The acrylamide concentration of the coffee beans after the heating treatment was measured. The Agtron color index values of the beans for each number of heating days were all equivalent to #45. The results are shown in Table 5.

[Table 5]

| Number of heating days | Acrylamide concentration (ppm) | Ratio (%) to acrylamide concentration of beans subjected only to roasting |
|---|---|---|
| Roasting only | 0.14 | 100 |
| 3 days | 0.03 | 21.4 |
| 7 days | 0.02 | 14.3 |

Example 6: Measurement of change over time in acrylamide concentration when coffee beans roasted until immediately after second crack were heated at 150°C

The raw beans used were the same as those used in Example 1, and roasting was performed according to the roasting method of Example 3. The raw beans of one specimen were approximately 200 g, and roasting was performed for each specimen. In order to use each specimen for sensory evaluation, the roasting was stopped not immediately after the first crack in which only sourness was noticeable, but immediately after the second crack in which sourness and bitterness were balanced (temperature at the time of stopping roasting: about 220°C), and the specimens were cooled according to Example 3. The Agtron color disc value of beans stopped roasting immediately after the second crack was equivalent to #45. Thereafter, each specimen was subjected to heating treatment at 150°C for 10 minutes, 30 minutes, 60 minutes, and 120 minutes. A Panasonic domestic steam oven range NE-BS1200 was used for heating. The oven range was preheated in the oven mode, and the square plate on which the roasted beans were spread was set on the lower stage and heated. The acrylamide concentration of the coffee beans after heating was measured. The results are shown in Table 6. In addition, the acrylamide concentration of beans subjected only to roasting (beans after cooling for 1 day (24 hours)) was measured, and the ratio of the acrylamide concentration after heating treatment when the acrylamide concentration of beans subjected only to roasting was taken as 100% is shown. The Agtron color index values of the beans for each heating time were all equivalent to #45.

[Table 6]

| Heating time | Acrylamide concentration (ppm) | Ratio (%) to acrylamide concentration of beans subjected only to roasting |
|---|---|---|
| Roasting only | 0.14 | 100 |
| 10 minutes | 0.11 | 78.6 |
| 30 minutes | 0.06 | 45.9 |
| 60 minutes | 0.05 | 35.7 |
| 120 minutes | 0.03 | 21.4 |

The time required for reducing the acrylamide concentration of the coffee beans after the roasting step to 78.6% by the heating treatment is 10 minutes at 150°C, and the amount of heat given to the coffee beans after the roasting step is amount of heat (J) = $1.56 \times 10^7$, which is $7.8 \times 10^7$ per 1 kg.

Further, assuming that the time required for roasting is 20 minutes, the amount of heat that is required for roasting is: amount of heat (J) = $2.35 \times 10^7$, which is $1.18 \times 10^8$ per 1 kg.

As described above, in order to reduce the acrylamide concentration of the coffee beans subjected to the roasting step to 90%, the amount of heat to be given can be reduced as compared with the case where the heating treatment is performed before the roasting step.

In addition, in Example 6 (heating at 90°C), it took 3 days to obtain an acrylamide concentration of 21.4%, but in Example 7 (heating at 150°C), it was confirmed that the acrylamide concentration of 21.4% could be achieved in only 120 minutes.

<Sensory Evaluation>

In the sensory evaluation, in order to evaluate the presence or absence of a change in taste quality of both sourness and bitterness, not lightly roasted beans (stopping roasting immediately after the first crack) in which only sourness stands out, but deeply roasted beans (stopping roasting immediately after the second crack) in which sourness and bitterness are balanced were used. 10 g of coffee beans were medium-ground (particle size: about 0.6 to 0.71 mm, standard of All Japan Coffee Association) and extracted by a paper filter drip method using 130 mL of tap water at about 80°C. As a control, an extract of beans roasted at a normal high temperature was used. In the sensory test, four healthy adults who regularly drank coffee were asked to drink coffee, and the sourness and bitterness were evaluated on a scale of 1 to 5. The taste quality of beans roasted at a normal high temperature was evaluated as 3, a slight enhancement as 4, a strong enhancement as 5, a slight reduction as 2, and a strong reduction as 1.

Example 7: Sensory test of beans obtained by roasting until immediately after second crack after performing heating treatment of raw beans at 90°C for 7 days

The raw beans used were the same as those used in Example 1, and the heating treatment was performed in the same manner as in Example 1. After the heating treatment, the coffee beans were roasted until immediately after the second crack in the same manner as in Example 5. An extract was prepared using the coffee beans roasted until immediately after the second crack, and a sensory evaluation was performed. The results are shown in Table 7.

The acrylamide concentration of the coffee beans roasted after the heating treatment was 0.12 ppm, and the ratio thereof to the acrylamide concentration of the coffee beans subjected only to roasting was 85.7% (acrylamide concentration of coffee beans subjected only to roasting: 0.14 ppm).

[Table 7]

| | Subject 1 | | Subject 2 | | Subject 3 | | Subject 4 | |
|---|---|---|---|---|---|---|---|---|
| | Sourness | Bitterness | Sourness | Bitterness | Sourness | Bitterness | Sourness | Bitterness |
| Heating treatment at 90°C for 7 days | 3 | 3 | 3 | 3 | 3 | 3 | 3 | 3 |
| Remarks | | | | | | | A slight fermentation odor was sensed in the coffee extracted from the beans subjected to heating treatment for 7 days. | |

Example 8: Sensory test of coffee beans obtained by performing heating treatment at 90°C for 3 days and 7 days after roasting until immediately after second crack

The raw beans used were the same as those used in Example 1, and roasting was performed until immediately after the second crack in the same manner as in Example 5. Thereafter, a sensory test was performed using coffee beans subjected to a heating treatment at 90°C in the same manner as in Example 1. The results are shown in Table 8.

[Table 8]

| | Subject 1 | | Subject 2 | | Subject 3 | | Subject 4 | |
|---|---|---|---|---|---|---|---|---|
| | Sournes | Bitterness | Sourness | Bitterness | Sourness | Bitterness | Sourness | Bitterness |
| Heating treatment at 90°C for 3 days | 3 | 3 | 3 | 3 | 3 | 3 | 3 | 3 |
| Heating treatment at 90°C for 7 days | 3 | 3 | 2 | 2 | 3 | 3 | 3 | 3 |
| Remarks | | | | | The coffee extracted from beans that had been subjected to the heating treatment for 7 days had more umami than the control. | | | |

Example 9: Sensory test of coffee beans obtained by performing heating treatment at 150°C for 120 minutes after roasting until immediately after second crack

Among the coffee beans of Example 6, coffee beans that were roasted and then subjected to a heating treatment for 120 minutes were used to perform a sensory test. The results are shown in Table 9.

[Table 9]

| | Subject 1 | | Subject 2 | | Subject 3 | | Subject 4 | |
|---|---|---|---|---|---|---|---|---|
| | Sourness | Bitterness | Sourness | Bitterness | Sourness | Bitterness | Sourness | Bitterness |
| Heating treatment at 150°C for 120 minutes | 3 | 3 | 3 | 3 | 3 | 3 | 3 | 3 |
| Remarks | Umami was slightly reduced compared with the control. | | | | | | | |

Reference Example 1 Sensory test of coffee beans stored frozen for 6 months and coffee beans stored at room temperature for 6 months after roasting until immediately after second crack

The raw beans used were those harvested in our own coffee plantation, and roasting was performed until immediately after the second crack in the same manner as in Example 3. The roasted beans were divided into two groups, one of which was stored frozen in Ziploc (registered trademark) for 6 months before testing, and the other was stored in a glass container (soda glass sealed bottle, 500 mL, manufactured by MUJI) for 6 months at room temperature without direct sunlight. For reference of the sensory evaluation, the pH of a liquid obtained by extracting coffee beans of each group after 6-month storage with water was also measured. The liquid was extracted by the aforementioned paper filter drip method, and the pH was measured using a PH60 pH tester manufactured by APERA INSTRUMENTS Co., Ltd. The results are shown in Table 10.

[Table 10]

| | pH | Subject 1 | | Subject 2 | | Subject 3 | | Subject 4 | |
|---|---|---|---|---|---|---|---|---|---|
| | | Sourness | Bitterness | Sourness | Bitterness | Sourness | Bitterness | Sourness | Bitterness |
| Beans stored frozen for 6 months after roasting | 5.59±0. 02 | 3 | 3 | 3 | 3 | 3 | 3 | 3 | 3 |
| Beans stored at room temperaturer for 6 months after roasting | 5.12±0. 00 | 5 | 1 | 4 | 1 | 5 | 1 | 4 | 1 |
| Remarks | | The beans stored at room temperature had an unpleasant rancid smell, and the sourness in which sweetness and bitterness characteristic to coffee had disappeared was remarkable in taste. | | The beans stored at room temperature had an unpleasant rancid smell, and the sourness in which sweetness and bitterness characteristic to coffee had disappeared was remarkable in taste. | | The beans stored at room temperature had an unpleasant rancid smell, and the sourness in which sweetness and bitterness characteristic to coffee had disappeared was remarkable in taste. | | The beans stored at room temperature had an unpleasant rancid smell, and the sourness in which sweetness and bitterness characteristic to coffee had disappeared was remarkable in taste. | |

All of the test subjects evaluated the beans that had been stored at room temperature for 6 months after roasting as having an unpleasant rancid smell, and evaluated only the sourness, from which the sweetness and bitterness characteristic to coffee had disappeared, as a prominent taste.

Industrial Applicability

According to the present invention, deterioration of taste and flavor does not occur, and acrylamide can be reduced in the state of coffee beans, so that the coffee beans can be suitably used as a product with less influence on health.

**Claims**

1. A method for treating coffee beans, comprising a heating treatment step of heating coffee beans at a temperature of 40°C or higher and lower than a temperature at which a first crack occurs.

2. The method for treating coffee beans according to claim 1, further comprising a roasting step of roasting the coffee beans, wherein the heating treatment step is performed before the roasting step.

3. The method for treating coffee beans according to claim 1, further comprising a roasting step of roasting the coffee beans, wherein the heating treatment step is performed after the roasting step.

4. The method for treating coffee beans according to claim 1, further comprising a roasting step of roasting the coffee beans, wherein the heating treatment step includes a first heating treatment step performed before the roasting step, and a second heating treatment step performed after the roasting step.

5. The method for treating coffee beans according to any one of claims 2 to 4, wherein the heating treatment step is performed until an acrylamide concentration in the coffee beans becomes 90% or less as compared with coffee beans subjected to only the roasting step.

6. Coffee beans obtained from the same raw beans, wherein a concentration of acrylamide in the coffee beans is 90% or less as compared with coffee beans immediately after being subjected to only a roasting step.

7. The coffee beans according to claim 6, wherein a liquid obtained by extracting the coffee beans with water is not accompanied by a decrease in pH caused by rancidity.

8. The coffee beans according to claim 6 or 7, wherein the coffee beans have a concentration of free asparagine of 29 mg/100 g or less.

9. Coffee beans treated by the method for treating coffee beans according to any one of claims 1 to 4.

## INTERNATIONAL SEARCH REPORT

| International application No. |
|---|
| **PCT/JP2024/012695** |

| **A.** | **CLASSIFICATION OF SUBJECT MATTER** |
|---|---|

*A23F 5/02*(2006.01)i; *A23F 5/04*(2006.01)i; *A23F 5/10*(2006.01)i
FI: A23F5/02; A23F5/04; A23F5/10

According to International Patent Classification (IPC) or to both national classification and IPC

| **B.** | **FIELDS SEARCHED** |
|---|---|

Minimum documentation searched (classification system followed by classification symbols)

A23F5/02; A23F5/04; A23F5/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2018-536408 A (NESTEC S.A.) 13 December 2018 (2018-12-13) claims, paragraphs [0012]-[0015], [0040], [0042], [0054], [0069], examples | 1-3, 5-9 |
| A | | 4 |
| X | 自宅で浅煎りコーヒーを焙煎するコツとは? 手順やハゼのタイミングなどを紹介! , Lithon Life [online], 17 March 2021, Internet <URL: https://lithon-store.com/lithonlife/coffeeroaster/light-roast/>, [retrieved on 15 May 2024], non-official translation (What are tips for roasting light-roast coffee at home? Learn the steps, timing of cracking, and more!) pp. 3-6 | 1, 6-9 |
| A | | 2-5 |
| X | JP 2006-503592 A (PROCTER & GAMBLE) 02 February 2006 (2006-02-02) claims, paragraphs [0001]-[0005] | 6-8 |
| A | | 1-5, 9 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 May 2024** | **28 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/012695**

| Patent document cited in search report | | | Publication date (day/month/year) | Patent family member(s) | Publication date (day/month/year) |
|---|---|---|---|---|---|
| JP | 2018-536408 | A | 13 December 2018 | US 2018/0360064 A1 <br> claims, paragraphs [0012]-[0015], [0040], [0042], [0054], [0069], examples <br> EP 3386312 A1 <br> CN 108366573 A <br> KR 10-2018-0086200 A | |
| JP | 2006-503592 | A | 02 February 2006 | US 2004/0081724 A1 <br> claims, paragraphs [0001]-[0012] <br> EP 1555885 A2 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006503592 A

**Non-patent literature cited in the description**

- **E. TAREKE**. Analysis of Acrylamide, a Carcinogen Formed in Heated Foodstuffs. *J. Agric. Food Chem.*, 2002, vol. 50, 4998-5006
- **D.S. MORTTRAM** ; **B.L. WEDZICH** ; **A.T. DODSON**. Acrylamide is formed in the Maillard reaction. *Nature*, 2002, vol. 419, 448-449
- **D.K.BEDADE** ; **Y.B.SUTAR** ; **R.S.SINGHAL**. Chitosan coated calcium alginate beads for covalent immobilization of acrylamide: process parameters and removal of acrylamide from coffee. *Food Chem*, 2019, vol. 275, 95-104
- **P. RATTANARAT** ; **N.CHINDAPAN** ; **S.DEVAHASTIN**. Comparative evaluation of acrylamide and polycyclic aromatic hydrocarbons contents in Robusta coffee beans roasted by hot air and superheated steam. *Food Chem*, 2021, vol. 341

- **M.ANESE** ; **M.C.NICOLI** ; **G.VERARDO** ; **M.MUNARI** ; **G.MIROLO** ; **R.BORTOLOMEAZZI**. Effect of vacuum roasting on acrylamide formation and reduction in coffee beans. *Food Chem*, 2014, vol. 145, 168-172
- **T. DELATOUR et al.** Improved sample preparation to determine acrylamide in difficult matrixes such as chocolate powder, cocoa, and coffee by liquid chromatography tandem mass spectroscopy. *J. Agric. Food Chem.*, 28 July 2004, vol. 52 (15), 4625-4631
- **K. HOENICKE** ; **R. GATERMANN**. Studies on the Stability of Acrylamide in Food During Storage. *Journal of AOAC International*, 2006, vol. 88 (1), 268-273
- **I. LANTZ** ; **R. TERNITE** ; **J. WILKENS** ; **K. HOENICKE** ; **H. GUENTHER** ; **G. H. D. VAN DER STEGEN**. Studies on acrylamide levels in roasting, storage and brewing of coffee. *Mol. Nutr. Food Res.*, 2006, vol. 50, 1039-1046